# EUROPEAN PATENT APPLICATION

(11) **EP 1 601 117 A2**
(43) Date of publication of application: **30.11.2005**
(21) Application number: 05252605.0
(22) Date of filing: 26.04.2005
(51) Int. Cl.: H04B 7/04

(54) **Wireless transmission method and wireless transmitter having a plurality of antennas**

(30) Priority: 27.05.2004 JP 2004158335
(71) Applicant: KABUSHIKI KAISHA TOSHIBA, Tokyo 105-8001 (JP)
(72) Inventor: Takeda, Daisuke, Kawasaki-shi Kanagawa (JP); Takagi, Masahiro, Tokyo (JP); Aoki, Tsuguhide, Kizuki, Nakahara-ku Kawasaki, Kanagawa (JP); Tanabe, Yasuhiko, Kizuki, Nakahara-ku Kawasaki, Kanagawa (JP); Deguchi, Noritaka, Kawasaki-shi Kanagawa (JP)
(74) Representative: Richardson, Mark Jonathan

(57) **Abstract**

In a wireless transmission method and wireless transmitter using a plurality of antennas at least in signal transmission, a process requiring a high immediateness is enabled to implement at the reception end. A wireless communication apparatus, for making a transmission based on a transmission unit being specified as a predetermined plurality of symbols, sends a plurality of symbols other than the last N symbols (N is an integer equal to or greater than 1) of the transmission unit through use of a plurality of antenna, and the last N symbols of the transmission unit through use of one antenna.

## Description

### CROSS-REFERENCE TO RELATED APPLICATIONS

This application is based upon and claims the benefit of priority from the prior Japanese Patent Application No. 2004-158335, filed May 27, 2004, the entire contents of which are incorporated herein by reference.

### BACKGROUND OF THE INVENTION

### 1. Field of the Invention

This invention relates to a wireless transmission method with a wireless transmitter using a plurality of antennas.

### 2. Description of the Related Art

There are many proposals of wireless communication systems having a plurality of antennas for use in sending signals. Particularly, the wireless communication system, using a plurality of antennas at the transmission end besides at the reception end, is called MIMO (multi-input multi-output).

Such wireless communication systems include a spatial-multiplexing scheme for sending independent, different pieces of information on a stream-by-stream basis (stream: information sequence sent at each antenna), and a scheme for sending related information, stream by stream, to obtain a diversity effect. These schemes require an especial signal processing at the reception end. For example, the former requires a process to separate the streams of information while the latter necessitates a process to get a diversity gain.

Meanwhile, even where a plurality of antennas are used in transmission, by sending same pieces of information or using CDD (cyclic delay diversity) that the samples within one symbol are shifted from antenna to antenna (M. Bossert, A. Huebner, F. Schuehlein, H. Haas & E. Costa, "On Cyclic Delay Diversity in OFDM Based Transmission Schemes," In proc. 7th International OFDM Workshop, Hamburg, Germany, September 2002). A certain degree of diversity gain can be obtained without the need of an especial process at the reception end.

Recently, the wireless communication systems are in a tendency toward increase of complexity. For example, in such a system as a wireless LAN, ACK (acknowledgement) must be sent back immediately after receiving a packet. In the wireless communication system thus requiring a high immediateness at the reception end, when transmission is done at the transmission end through use of a plurality of antennas, the reception end requires a process to de-multiplex the spatial streams sent at the antennas out of the reception signal, thus raising a problem of increasing process amount. Namely, the reception end, after received a frame or packet end, is strictly restricted in time. This requires a fast-rate signal processing in order to achieve the reception process in a limited time. In the case of sending the information requiring immediateness as in TPC (transmit power control) bits under the specification for the third-generation cellular system, conspicuous restrictions are raised in the process time at the reception end.

### SUMMARY OF THE INVENTION

It is an object of the present invention to provide a wireless transmission method and wireless transmitter capable of easily making a process requiring a high immediateness at the reception end.

According to a first aspect of the invention, there is provided a wireless transmission method used for a wireless transmitting apparatus having a plurality of antennas and for transmitting information based on a transmission unit including a plurality of symbols, the method comprising: transmitting a plurality of symbols other than last N symbols (N is an integer equal to or greater than 1) of the transmission unit to an opposite wireless communication apparatus by use of the plurality of antennas; and transmitting the last N symbols of the transmission unit to the opposite wireless communication apparatus by using one of the plurality of antennas.

According to a second aspect of the invention, there is provided a wireless transmission method used for a wireless transmitting apparatus having a plurality of antennas and for transmitting information based on a transmission unit including a plurality of symbols, the method comprising: transmitting a plurality of symbols other than last N symbols (N is an integer equal to or greater than 1) of the transmission unit to an opposite wireless communication apparatus by use of the plurality of antennas; and transmitting same information as the last N symbols being common to the plurality of antennas to the opposite wireless communication apparatus by use of the plurality of antennas.

According to a third aspect of the invention, there is provided a wireless transmission method used for a wireless transmitting apparatus having a plurality of antennas and for transmitting information based on a transmission unit including a plurality of symbols, the method comprising: transmitting a plurality of symbols other than last N symbols (N is an integer equal to or greater than 1) of the transmission unit to an opposite wireless communication apparatus by use of the plurality of antennas; and transmitting the last N symbols of the transmission unit to the opposite wireless communication apparatus by use of antennas selected so as to be reduced in the number, by stages, from the plurality of antennas.

According to a fourth aspect of the invention, there is provided a wireless transmitter used for communicating with an opposite wireless communication apparatus comprising: at least two transmission antennas; a spatial parser that divides an input data into a plurality of streams in the same number as the transmission antennas for spatial-multiplexing, wherein the each of the stream comprising a plurality of symbols; and wherein the spatial parser that provides same information to the each of the streams when the input data having information requiring immediateness.

### BRIEF DESCRIPTION OF THE DRAWINGS

Fig. 1 is a block diagram of a transmitter according to a first embodiment of the present invention;
Fig. 2 is a figure explaining a method of sending the first M symbols and last N symbols of each transmission unit such as a frame in the first embodiment;
Fig. 3 is a block diagram of a receiver according to the first embodiment of the invention;

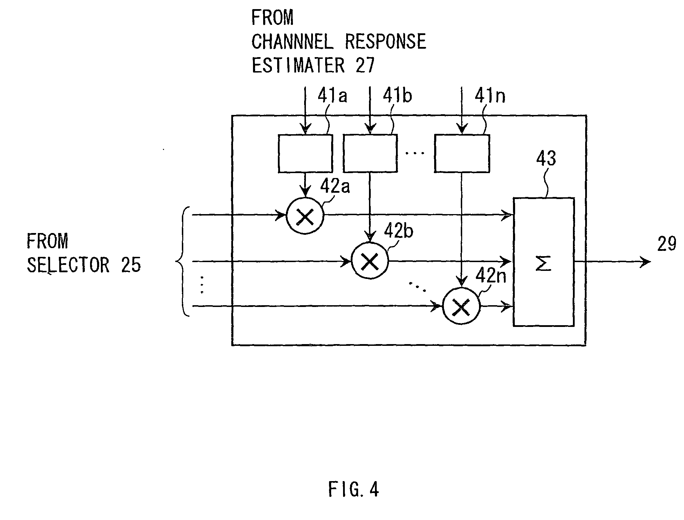

Fig. 4 is a block diagram of one example of a coherent detector in Fig. 2;
Fig. 5 is a block diagram of a transmitter according to a second embodiment of the invention;
Fig. 6 is a block diagram of a transmitter according to a third embodiment of the invention;
Fig. 7 is a figure explaining a method of sending the first M symbols and last N symbols of each transmission unit in the third embodiment;
Fig. 8A and 8B are figures showing a transmission method by a cyclic delay diversity (CDD) used in explaining the third embodiment;
Fig. 9 is a figure explaining a method of sending the first M symbols and last N symbols of each transmission unit such as a frame in a transmitter of a fourth embodiment of the invention;
Fig. 10 is a figure explaining a method of sending information requiring immediateness in a transmitter of a fifth embodiment of the invention;
Fig. 11 is a figure explaining a method of sending information requiring immediateness in a transmitter of a sixth embodiment of the invention;
Fig. 12 is a figure explaining a method of sending the first M symbols and last N symbols of each transmission unit in a transmitter of a seventh embodiment of the invention;
Fig. 13 is a block diagram of a receiver according to the seventh embodiment of the invention; and
Fig. 14 is a figure explaining a method of sending the first M symbols and last N symbols of each transmission unit in a transmitter of an eighth embodiment of the invention.

### DETAILED DESCRIPTION OF THE INVENTION

With reference to the drawings, embodiments of the present invention will now be described in detail. The wireless transmission system in each embodiment is applicable to a wireless LAN or mobile communication system (cellular system) including at least one base station apparatus or access point and at least one terminal, for example. The following describes a transmitter and receiver included in a wireless communication apparatus, as a base station apparatus for a cellular system, an access point for a wireless LAN system, or a wireless terminal.

### (First Embodiment)

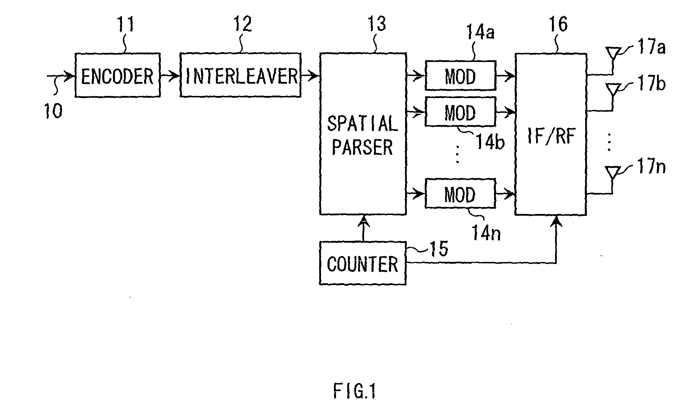

Referring to Fig. 1, description is made on a transmitter according to a first embodiment of the invention. Fig. 1 is a physical layer in the transmitter to which data to be transmitted (bit string) 10 is inputted per the transmission unit (e.g. frame or packet) from the higher layer. For example, for a wireless LAN, the data 10 is allocated first with a known signal for channel estimation and AGC (automatic gain control) and then with a data signal, in each transmission unit thereof. The inputted data 10 is subjected to error-correction coding by an encoder 11 and further interleave processing by an interleaver 12, followed by being inputted to a spatial parser 13.

The spatial parser 13 divides the input data into a plurality of streams in the same number as the transmission antennas according to an instruction from a counter 15, or outputs it as one stream without division. Where the spatial parser 13 divides the input data into a plurality of streams, the streams outputted from the spatial parser 13 are respectively inputted to modulators 14a, 14b, ..., 14n. Meanwhile, in the case the spatial parser 13 outputs a stream of the input data, as it is, without division, the data outputted as one stream from the spatial parser 13 is inputted to one modulator, e.g. modulator 14a.

The data modulated by the modulators 14a, 14b, ..., 14n is inputted to an RF/IF stage 16. In the RF/IF stage 16, a base-band signal as input data is first converted into an IF (intermediate frequency) signal and further into an RF (radio frequency) signal, then being power-amplified. The RF signals outputted from the RF/IF stage 16 are supplied to transmission antennas 17a, 17b, ..., 17n and sent to the wireless communication apparatus on the opposite of communication.

The counter 15 counts the number of symbols at from the beginning of transmission unit such asframe or packet, in each transmission unit of the data 10, and sends the count value to the spatial parser 13 and RF/IF stage 16. Provided that the number of symbols is M + N (M, N are integers equal to or greater than 1) in each transmission unit of the data 10, the spatial parser 13 makes a stream demultiplexing operation during the period of a count value 0 - M on the counter 15. Accordingly, the spatial parser 13 divides the first M symbols into a plurality of streams, in each transmission unit of the input data.

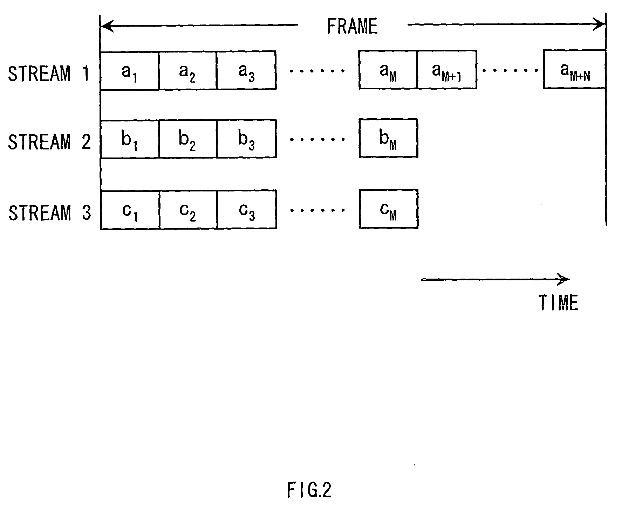

In case taking an example the spatial parser 13 divides the input data in an amount of transmission unit into three streams 1, 2 and 3, the stream 1 is allocated with symbols a1, a2, a3, ..., aM during the period of a count value 0 - M on the counter 15, as shown in Fig. 2. Likewise, the stream 2 is allocated with symbols b1, b2, b3, ..., bM, and the stream 3 is allocated with symbols c1, c2, c3, ..., cM. The transmission unit is a quantity of information that is sent as a single unit from the transmitter to the receiver. In Fig. 2 the transmission unit is based on a frame. The frame comprises M+N symbols in Fig. 2 The transmission unit may be based on the packet.

As shown in Fig. 2, the divided streams 1, 2 and 3 are independent, different pieces of information. These are respectively modulated by the modulators 14a, 14b, ..., 14n and inputted to the IF/RF stage 16. The IF/RF stage 16, during the period of a count value 0 - M on the counter 15, processes each of output data from the modulators 14a, 14b, ..., 14n and generates RF signals to be sent to the transmission antennas 17a, 17b, ..., 17n. Thus, RF signals as independent pieces of information are sent at the transmission antennas 17a, 17b, ..., 17n. In this manner, the first M symbols of information of each transmission data unit are sent by a spatial multiplexing scheme with use of the plurality of transmission antennas.

The spatial parser 13, during the period of a count value M+1 - M+N on the counter 15, does not perform a stream demultiplexing operation but outputs symbols aM+1, ..., aM+N only to the stream 1 as shown in Fig. 2, to send the input data stream as it is to the modulator 14a. Namely, of each transmission unit in the input data to the spatial parser 13, the last N symbols are outputted as one stream and modulated by the modulator 14a. The IF/RF stage 16, during the period of a count value M+1 - M+N on the counter 15, processes only the output data from the modulator 14a and generates an RF signal, to supply it to the corresponding antenna 17a. In this manner, of each transmission data unit, the last N symbols of information are sent at the single antenna 17a.

Here, the antenna, for sending the last N symbols of information in each transmission data unit, may be fixedly defined previously. Otherwise, a best-suited antenna can be adaptively selected by taking account of channel conditions. With a transmission at the antenna favorable in channel conditions as in the latter, transmission error can be reduced while using a single antenna.

In this manner, of each transmission unit in transmission data, the first M symbols of information (symbols a1, a2, a3, ..., aM, symbols b1, b2, b3, ..., bM, symbols c1, c2, c3, ..., cM) are sent by spatial multiplexing through the plurality of transmission antennas 17a, 17b, ..., 17n. For this reason, the receiver end is required to separate the reception signal into a plurality of streams. On the contrary, of each transmission unit in transmission data, the last N symbols of information (symbols aM+1, ..., aM+N) are sent only at the single antenna 17a. The receiver end is not required such a process as to separate the reception signal into streams. This makes it easy to satisfy such restrictions in time as to send back an ACK after waiting for receiving the last N symbols, for example.

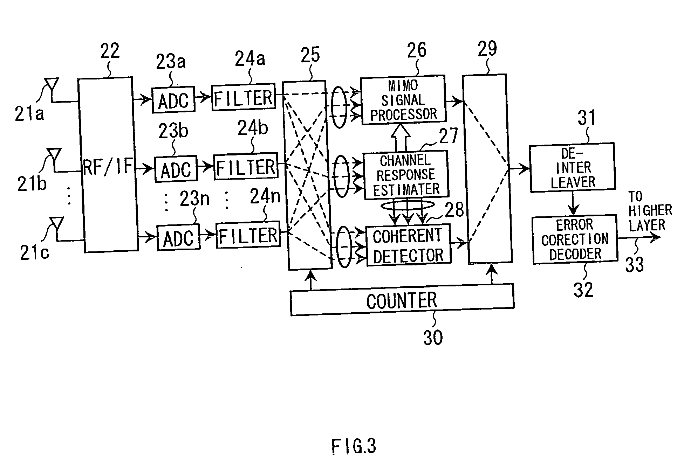

Using Fig. 3, description is now made on a receiver in the first embodiment of the invention. In Fig. 3, the RF signal sent from the transmitter of Fig. 1 are received at a plurality of reception antennas 21a, 21b, ..., 21n. The RF signals at the reception antennas 21a, 21b, ..., 21n are inputted to the RF/IF stage 22. In the RF/IF stage 22, the inputted RF reception signals are respectively amplified by low-noise amplifiers (LNAs), and then converted into IF signals and further converted into base-band signals.

The analog base-band signals outputted from the RF/IF stage 22 are converted by A/D converters (ADC) 23a, 23b, ..., 23n into digital signals. The digital base-band signals outputted from the A/D converters 23a, 23b, ..., 23n are respectively removed of unwanted components by filters 24a, 24b, ..., 24n, and then inputted to any of a MIMO signal processor 26, a channel response estimater 27 and a coherent detector 28 by means of an input selector 25.

The counter 30 counts the number of symbols in each transmission unit (frame or packet) of the digital base-band signal inputted to the input selector 25, thereby deciding whether the symbols are of a known signal or a data signal. Furthermore, as for the data signal, it is decided whether of an end symbol (the last N symbols in the transmission unit) or not. Depending upon a decision result due to the counter 30, control is made on the input selector 25 and the output selector 29.

For example, in the case that the input signal to the input selector 25 is a known signal as a result of a decision by the counter 30, the known signal is inputted to the channel response estimater 27. When the input signal to the input selector 25 is a data signal, the signal of the other M symbols than the last N symbols of the data signal is inputted to the MIMO (multi-input multi-output) signal processor 26. In the MIMO signal processor 26, the input signal is separated of the signals sent at the transmission antennas 17a, 17b, ..., 17n of the transmitter shown in Fig. 1, according to algorisms, e.g. MLE (maximum likelihood estimation) and BLAST (Bell Labs layered space time).

The channel response estimater 27 makes a channel estimation on channel matrix from the transmission antennas 17a, 17b, ..., 17n of the transmitter shown in Fig. 1 over to the reception antennas 21a, 21b, ..., 21n of the receiver of Fig. 3, by use of the inputted known signal, thereby calculating an estimation value. The calculated estimation valueis used, in the MIMO signal processor 26, to separate the signals to be sent at the transmission antennas.

Meanwhile, in the case that, as a result of a decision result due to the counter 30, the input signal to the input selector 25 is a data signal and last N symbols of the transmission unit, the transmitter is to make a transmission at a single antenna wherein the signal from the transmitter is not spatially multiplexed. In such a case, the signal from the input selector 25 is inputted to the coherent detector 28 where coherent detection is effected by use of a channel estimation value calculated by the channel response estimator 27. Coherent detection is made satisfactorily by a simple operation the channel estimation value is merely complex-multiplied on the input signal.

Namely, the coherent detector 28 performs a coherent detection by determining, at blocks 41a, 41b, ..., 41n, conjugates to the channel response estimation values of from the channel response estimator 27, and multiplying those on the data signals of from the input selectors 25 by means of the multipliers 42a, 42b, ..., 42n followed by addition together by the adder 43. Incidentally, where the transmission end has transmitted with the last N symbols of the transmission unit by CDD (cyclic delay diversity), the channel estimation values corresponding to the antennas are combined together in a manner corresponding to the CDD and complex-multiplied on the data signal.

The series of processes are extremely short in processing time because to be considered by far easy as compared to the MIMO processing, such as MLE and BLAST. The data signal, thus obtained by the MIMO signal processor 26 or coherent detector 28, is inputted through an output selector 29 to a de-interleaver 31 where subjected to de-interleave, followed by error-correction decode by an error correction decoder 32. Thus, the data 33 sent is reproduced. The reproduced data 33 is forwarded to the higher layer.

In this manner, the receiver of Fig. 3, because of the capability of making a processing of the last N symbols of the transmission unit at high speed, can afford to have a time in the processing after received the packet or frame. Accordingly, such a process requiring high immediateness can be coped with as sending back an ACK in a particular time, for example.

### (Second Embodiment)

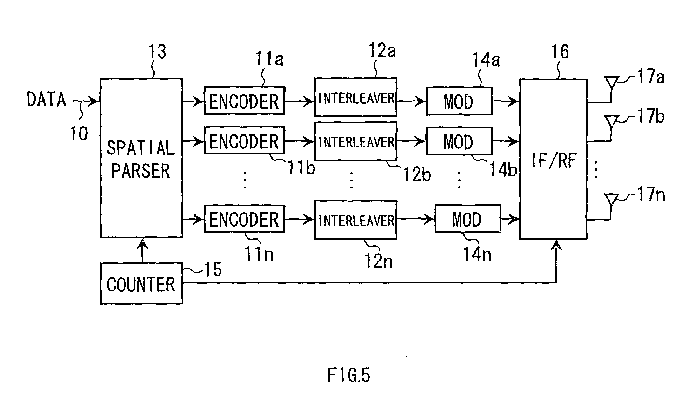

Fig. 5 shows a transmitter in a second embodiment as a modification to the transmitter in the first embodiment of the invention. The data to be transmitted 10, before being encoded, is divided by a spatial parser 13 into streams and then subjected to encode and interleave, stream by stream, by encoders 11a, 11b, ..., 11n and interleavers 12a, 12b, ..., 12n. The data, after encode and interleave processed, is inputted to the modulators 14a, 14b, ..., 14n. The processing at the modulators 14a, 14b, ..., 14n and the subsequent is similar to that of the first embodiment, hence omitting of explanations.

The spatial parser 13 makes a processing similarly to the first embodiment, excepting in that there is an input of pre-encode data. Consequently, the second embodiment can enjoy the effect similarly to the first embodiment. In the second embodiment, the receiver is satisfactorily similar to that of the first embodiment.

### (Third Embodiment)

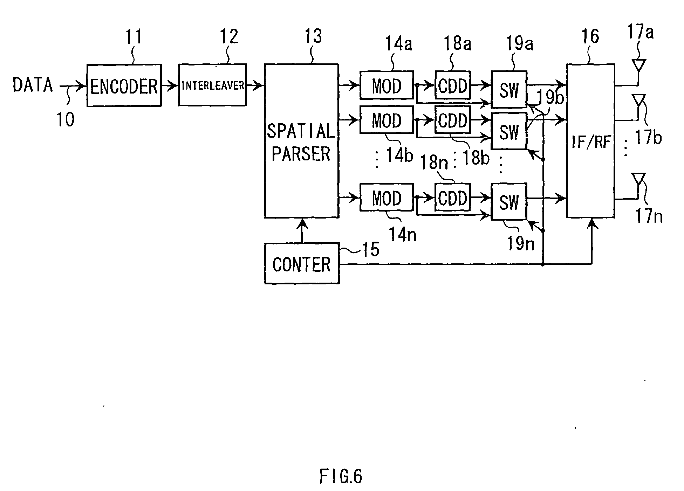

In a transmitter according to a third embodiment of the invention, there are inserted CDD (cyclic delay diversity) processors 18a, 18b, ... , 18n and switches 19a, 19b, ..., 19n between the modulators 14a, 14b, ..., 14n and the IF/RF stage 16 as shown in Fig. 6, in the transmitter of Fig. 1. The switches 19a, 19b, ..., 19n are controlled according to an instruction from the counter 15, to select any of an output of the modulator 14a, 14b, ..., 14n and an output of the CDD processors 18a, 18b, ..., 18n.

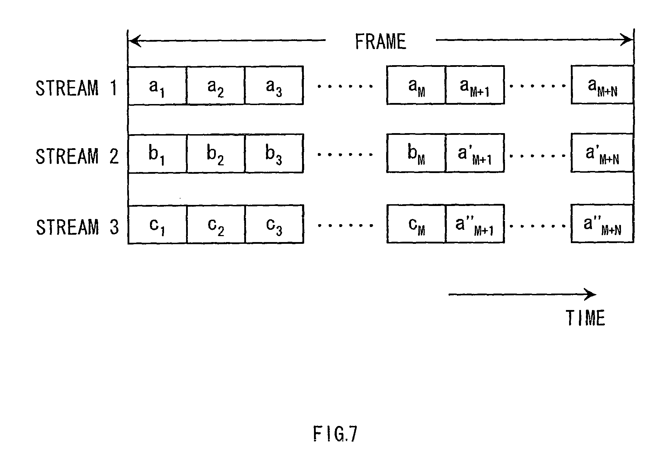

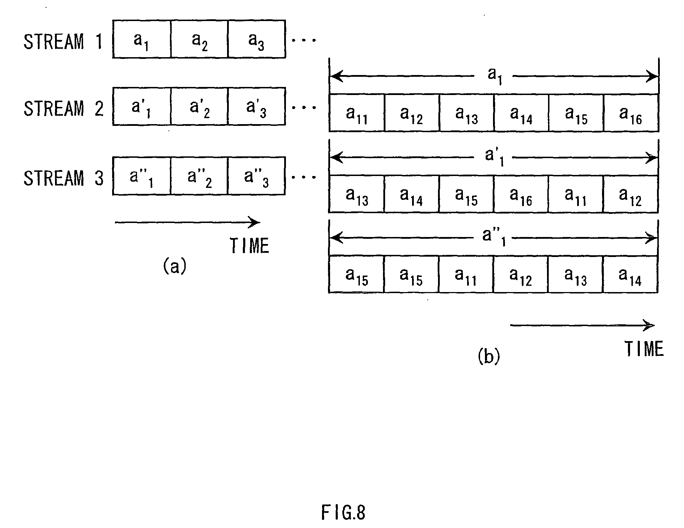

Using Figs. 7 and 8, description is made on the operation of the transmitter of Fig. 6. The operation is similar to that of the first embodiment except for the CDD processors 18a, 18b, ..., 18n and the switches 19a, 19b, ..., 19n. Namely, provided that the number of symbols is M+N (M and N are integers equal to or greater than 1) in the transmission unit of the data 10, the spatial parser 13 performs a stream demultiplexing operation during the period of a count value 0 - M on the counter 15. In case taking an example the spatial parser 13 divides the input data into three streams 1, 2 and 3, then symbols a1, a2, a3, ..., aM are allocated in the stream 1 during the period of a count value 0 - M on the counter 15 as shown in Fig. 7, similarly to Fig. 2. Likewise, symbols b1, b2, b3, ..., bM are allocated in the stream 2 while symbols c1, c2, c3, ..., cM are allocated in the stream 3.

In this case, during the period of a count value 0 - M on the counter 15, the switches 19a, 19b, ..., 19n are switched into a state to select the outputs of the modulators 14a, 14b, ..., 14n. Accordingly, the streams outputted from the spatial parser 13 are respectively modulated by the modulators 14a, 14b, ..., 14n and then delivered to the transmission antennas 17a, 17b, ..., 17n through the IF/RF stage 16. In this manner, of the transmission data units, the first M symbols of information are sent by the ordinary spatial-multiplexing scheme, similarly to the first embodiment.

The spatial parser 13 performs a stream demultiplexing operation also during the period of a count value M+1 - M+N on the counter 15, differently from the first embodiment. Meanwhile, the switches 19a, 19b, ..., 19n are switched into a state to select the outputs of the CDD processors 18a, 18b, ..., 18n during the period of a count value M+1 - M+N on the counter 15. Accordingly, the streams outputted from the spatial parser 13 are respectively subjected to CDD processing by the CDD processors 18a, 18b, ..., 18n and then delivered to the transmission antennas 17a, 17b, ..., 17n through the IF/RF stage 16.

In this manner, the third embodiment sends the last N symbols of information of the transmission data unit through the plurality of antennas 17a, 17b, ..., 17n similarly to the first M symbols of information, similarly to the first embodiment. However, the difference from the transmission of first M symbols lies in that the last N symbols are sent after same pieces of information is subjected to CDD processing.

Here, assumed is an example that the spatial parser 13 divides the input data into three streams 1, 2 and 3. Then, symbols aM, aM+1, ..., aM+N are allocated in the stream 1, symbols a'M, a'M+1, ..., a'M+N are in the stream 2 and symbols a"M, a"M+1, ..., a"M+N are in the stream 3, by the CDD processors 18a, 18b, ..., 18n during the period of a count value M+1 - M+N on the counter 15, as shown in Fig. 7.

Using Fig. 8, the CDD processing is detailed. It is assumed that, of the streams sent by the CDDs, the stream 1 has a symbol string a1, a2 and a3, the stream 2 has a symbol string a'1, a'2 and a'3, and the stream 3 has a symbol string a"1, a"2 and a"3, as shown in Fig. 8A. Then, a1, a'1 and a"1 are a cyclic shift in time of the symbols a11, a12, a13, a14, a15 and a16, as shown in Fig. 8B. For example, in the example of Fig. 8B, there are given as a1 = a11, a12, a13, a14, a15 and a16, a'1 = a13, a14, a15, a16, a11 and a12, and a"1 = a15, a16, a11, a12, a13 and a14.

Here, the relationship between aM+1, a'M+1, a"M+1 and aM+N, a'M+N, a"M+N in Fig. 7 lies in a cyclic shift in time of the symbol string having the same piece of information, similarly to a1, a'1 and a"1. In other words, the streams 1, 2 and 3 are the same in their last N symbols of information, i.e. difference lies only in the order of transmission.

The CDD provides a diversity effect without implementing an especial processing at the reception end. Furthermore, it can avoid a NULL (zero point in directivity) from directing due to sending the same pieces of information. Because the first M symbols in each transmission unit are sent by spatial multiplexing, the receiver requires a process to separate the reception signal into streams. On the contrary, because the last N symbols are sent by CDD, the receiver does not require such a process as to separate the streams. This makes it easy to cope with a process restricted in time, e.g. sending back an ACK to the transmitter.

Meanwhile, modification is possible to the third embodiment, e.g. stream division is made prior to encoding, to perform encode and interleave on a stream-by-stream basis, similarly to the second embodiment. In such a case, there is obtained an effect similarly to the foregoing.

### (Fourth Embodiment)

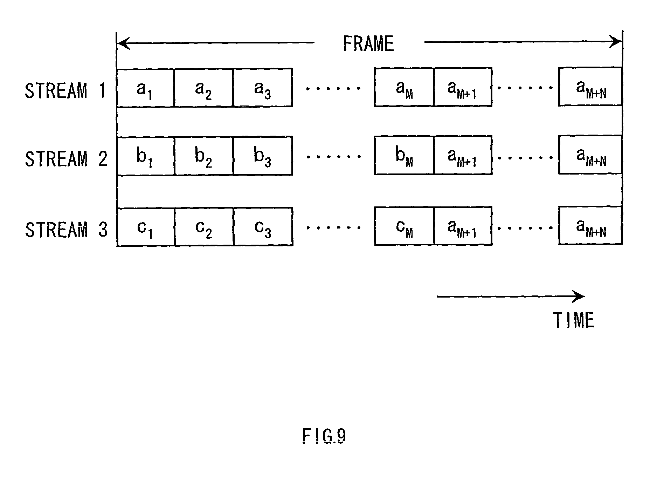

Using Fig. 9, description is made on a fourth embodiment of the invention. In Fig. 9, as for the last N symbols in the streams 1, 2 and 3 of the transmission data units (frames in this example), quite the same pieces of information aM+1, ..., aM+N are sent in the order as they are without performing a CDD processing, as compared to Fig. 7. In this case, enjoyed are no diversity effects due to CDD. However, for the last N symbols, there is no need to separate the streams at the receiver, thus providing an effect to facilitate such a process as to send back an ACK.

The transmitter in the fourth embodiment may be basically in such an arrangement as shown in Figs. 1 or 5 similarly to the first and second embodiments, satisfactorily requiring to merely change information allocation to the symbols. The receiver may be similar to that of Fig. 3.

### (Fifth Embodiment)

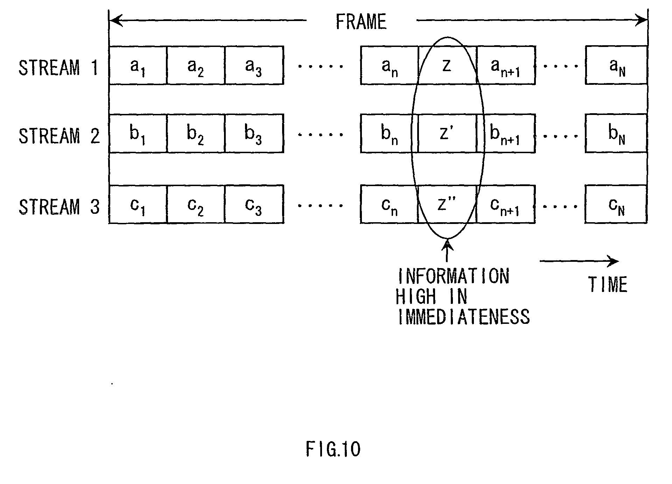

Using Fig. 10, description is made on a fifth embodiment of the invention. The transmitter in the fifth embodiment may be basically the same as the transmitter of the third embodiment, e.g. configured as shown in Fig. 6.

In the fifth embodiment, in the case of inserting information requiring high immediateness in the middle of the transmission unit, such information is sent by a CDD processing without performing a spatial multiplexing. In the example shown in Fig. 10, pieces of information z, z' and z" requiring such high immediateness are inserted respectively in the middle of the streams 1, 2 and 3 the frame as a transmission unit is divided. Such information includes, as an example, TPC (transmit power control) bits, which is transmission power control information used in the opposite commutation apparatus specified in 3rd generation cellular system.

In a wireless communication system applied with TPC, it is desired that TPC bits, when received by the receiver, are reflected immediately upon transmission power control. For this reason, in the fifth embodiment, information requiring such immediateness is sent by CDD without performing a spatial multiplexing. This makes it possible to cope with immediateness by simplifying the processing over the receiver.

### (Sixth Embodiment)

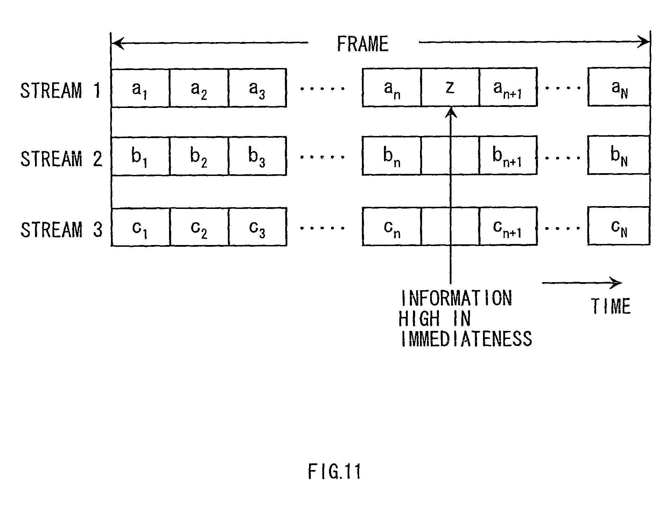

Using Fig. 11, description is made on a sixth embodiment of the invention. Fig. 10 showed the example that pieces of information z, z' and z" requiring immediateness are respectively inserted in the divided streams 1, 2 and 3, to send these pieces of information at the plurality of antennas. On the contrary, in a sixth embodiment of the invention, information z is to be sent at a single antenna as shown in Fig. 11. Namely, replaced is the transmission in a domain to be sent by CDD in Fig. 10, with a transmission at a single antenna. This approach can apparently cope with immediateness while simplifying the processing at the receiver.

Meanwhile, where to send only the information requiring high immediateness, e.g. TPC bits as in the foregoing, through a single antenna, demodulation is made available similarly to the description in Fig. 3 due to the decision of a period such information is being sent by means of the counter 30 on the Fig. 3 receiver. In the case that the information requiring high immediateness thus processed is of TPC bits, it is a general practice not to make a correction coding thereon. Accordingly, power increase/decrease can be detected by a hard decider from the TPC bits, based on which the power amplifier of the transmitter can be controlled to readily control the transmission power.

### (Seventh Embodiment)

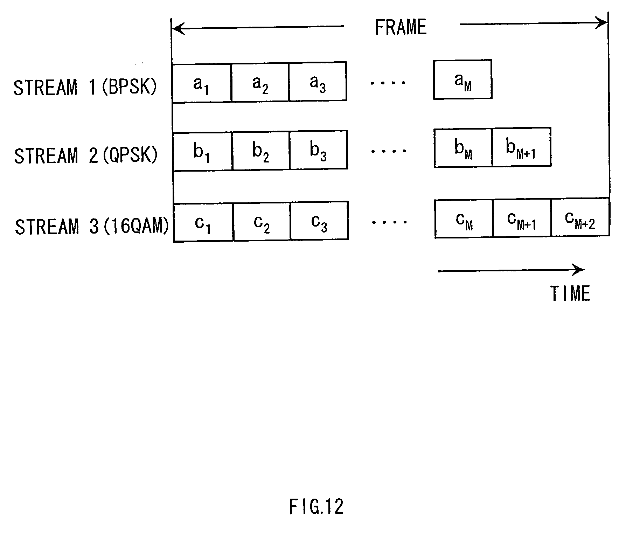

Using Fig. 12, description is made on a seventh embodiment of the invention. The seventh embodiment decreases, by stages, the number of antennas for use in sending the last N symbols of the transmission unit (frame, herein), i.e. the number of antennas for use in spatial multiplexing, in a predetermined order. Namely, this is relevant to the last N = 3 symbols in the example of Fig. 12. Of these, the first symbol is sent as symbols aM, bM and cM of the streams 1, 2 and 3, the second symbol is as symbols bM+1 and cM+1 of the streams 2 and 3, and the third symbol is as a symbol cM+2 of the stream 3, respectively.

More specifically, symbol allocations are done under modulation schemes of BPSK (binary phase shift keying) for the stream 1, QPSK (quadrature phase shift keying) for the stream 2, and 16QAM (16-quadrature phase shift keying) for the stream 3, respectively. Of the last N symbols, for the first symbol all the streams 1, 2 and 3 are sent by use of three transmission antenna. For the second symbol, transmission is interrupted on the stream 1 having the symbols modulated by BPSK, to send the streams 2 and 3 through use of two transmission antennas. For the third symbol, transmission is interrupted also on the stream 2 having the symbols modulated by QPSK, to send only the stream 3 through use of one transmission antenna.

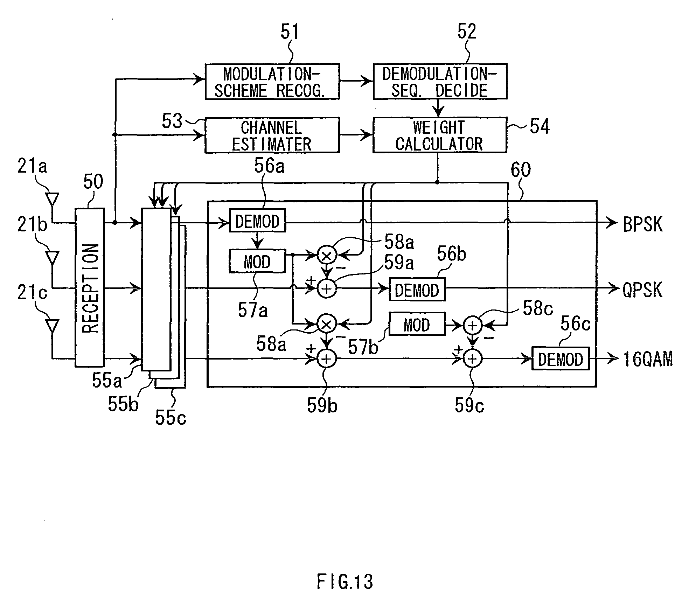

Using Fig. 13, description is made on a receiver in the seventh embodiment. The receiver shown in Fig. 13 corresponds to the reception of transmission signals in Fig. 12, which in this example employs an algorism called V-BLAST (vertical-Bell Labs Layered Space Time).

At first, the reception signals outputted from antennas 21a, 21b, ..., 21n are inputted to a reception circuit 50. The reception circuit 50 corresponding to the regions of the RF/IF stage 22, A/D converters 23a, 23b, ..., 23n and filters 24a, 24b, ..., 24n in Fig. 3, for example.

From header information, e.g. of an output signal of the reception circuit 50, a modulation-scheme recognizer 51 decides a modulation scheme on the stream, e.g. in which modulation scheme of BPSK, QPSK or 16QAM the stream is. Subsequently, a demodulation-sequence decider 52 decides an order of sequential demodulation starting at from the lowest order, e.g. BPSK, i.e. from the stream (stream 1 in the example of Fig. 12) being sent by a modulation scheme the transmission rate of which is the lowest relatively.

Here, in view of process simplification, Fig. 13 assumes a method that, instead of making an ordering depending upon channel conditions, S/N, etc. as in the usual V-BLAST, modulation scheme is changed for each stream to thereby make a demodulation starting from the lowest order of modulation scheme (BPSK, herein) (see 3GPPTSG RAN WG1 TSG-R1(01)0879, Increasing MIMO throughput with per-antenna rate control (Lucent Technologies)).

Meanwhile, the channel estimater 53 calculates a channel response estimation value from a known signal, e.g. a pilot signal, contained in an output signal from the reception circuit 50. The channel response estimation value is forwarded to a weight calculator 54 where calculated is a weight for interference removal. The calculated weight is removed of interference waves by an interference removers 55a, 55b, 55c, and used to extract a desired wave of signal.

The signal removed of interferences is demodulated on a stream-by-stream basis by demodulators 56a, 56b, 56c. In this case, the BPSK-modulated signal of stream 1 in Fig. 12 is first demodulated by the demodulator 56a. The output signal of the demodulator 56a is again modulated by a modulator 57a. The output signal of the modulator 57a is multiplied with a weight by a multiplier 58a and then deleted from an output signal of the interference remover 55b by the subtracter 59a. In this manner, after the signal modulated by BPSK is deleted, processing is similarly made in the order of the QPSK-modulated signal of stream 2 and the 16QAM-modulated signal of stream 3 in Fig. 12 by use of the multipliers 58b, 58c, demodulator 56b, modulator 57b and subtracters 59b, 59c.

The receiver of Fig. 13 can gradually simplify the process to demodulate the last 2 symbols by gradually decreasing the number of antennas for use in transmission as in Fig. 12, without changing the weight value calculated by the weight calculator 54. For example, up to the first M symbols of the transmission unit (frame) in Fig. 12, the stream 2 originally modulated by QPSK has been calculated with such a weight as to reduce the 16QAM-modulated signal on an assumption the BPSK-modulated signal has been deleted. Accordingly, even when the BPSK-modulated signal is ceased from being sent at the (M+1)-th symbol, there is no change in the weight to be applied to the signals modulated by QPSK and 16QAM.

In this manner, by gradually decreasing the number of antennas, at the transmitter, for use in sending the last N symbols of the transmission unit, the processing of the last N symbols can be simplified on the V-BLAST receiver.

### (Eighth Embodiment)

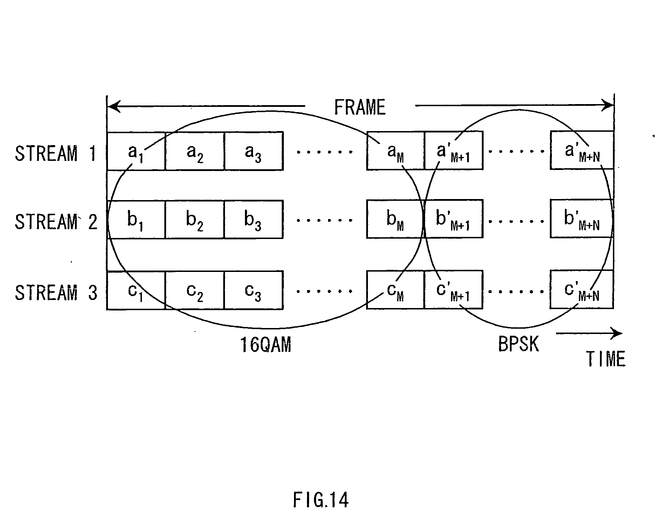

Using Fig. 14, description is made on an eighth embodiment of the invention. In the eighth embodiment, the first M symbols of the transmission unit (frame, herein) are sent with streams 1, 2 and 3 based on a modulation scheme relatively high in transmission rate, e. g. 16QAM. Meanwhile, the last N symbols of the frame are sent based on a modulation scheme, such as BPSK, having a relatively high transmission rate.

In the high transmission-rate modulation scheme, i.e. in the modulation scheme having a great modulation multi-value, there is a complexity in the process to stream-divide such a reception signal as spatially multiplexed besides the likelihood calculation for error correction in the receiver. Accordingly, concerning the last N symbols of the frame, by employing a simple modulation scheme low in transmission rate as in the above, such a processing as stream division is simplified on the receiver, thus readily coping with the process requiring a high immediateness such as of ACK.

The eighth embodiment can be extended to select MCS instead of to select a modulation scheme only. MCS (modulation and coding scheme) means the combination of modulation scheme and coding scheme, wherein a variety of different combinations are called an MCS set. In the case of selecting one MCS out of such a plurality of MCS sets and performing a transmission based on the transmission unit including a plurality of symbols, a plurality of symbols other than the last N symbols of the transmission unit are sent by use of a plurality of antennas and a first MCS relatively higher in ranking. Then, the last N symbols of the transmission unit are sent by use of a plurality of antennas and a second MCS relatively lower in ranking. By doing so, the similar effect to the eighth embodiment can be enjoyed on the receiver having the MCS selective function.

The invention is not limited to the foregoing embodiment as it is but can be embodied, in the practicing stage, by modifying the constituent element within the scope not departing from the gist thereof. Meanwhile, various inventions are to be formed by a proper combination of a plurality of the constituent elements disclosed in the foregoing embodiments. For example, some constituent elements may be deleted from all the constituent components disclosed in the embodiment. Furthermore, the constituent element over different embodiments may be suitably combined.

Specifically, various transmission operations in the following can be implemented by a proper combination, for example.
(a) A plurality of symbols other than the last N symbols of the transmission unit are sent by use of a plurality of antennas while the last N symbols of the transmission unit are sent by use of one antenna.
(b) In the case of a transmission based on the transmission unit including the first information together with the second information requiring the reception end to have a higher immediateness as compared to the first information, the first information is sent by use of a plurality of antennas while the second information is sent by use of one antenna.
(c) A plurality of symbols other than the last N symbols (N is an integer equal to or greater than 1) of the transmission unit are sent by use of a plurality of antennas while same pieces of information are sent as the last N symbols of the transmission unit by use of a plurality of antennas.
(d) In the case of sending the same information as the last N symbols in (c), the relevant information is sent with a shift in time between the plurality of antennas.
(e) In the case of transmission based on the transmission unit including the first information and the second information requiring the reception end to have a higher immediateness as compared to the first information, the second information is sent with a shift in time at a plurality of antennas by use of means for sending the first information by using a plurality of antennas and a plurality of antennas.
(f) In the case of a transmission based on the transmission unit including a plurality of symbols, a plurality of symbols other than the last N symbols of the transmission unit by use of a plurality of antennas while the last N symbols of the transmission unit are sent by using the antennas selected to be lessened, by phase, from a plurality of antennas.
(g) In the case of selecting one modulation scheme from a plurality of modulation schemes different in transmission rate and performing a transmission based on the transmission unit including a plurality of symbols, a plurality of symbols other than the last N symbols of the transmission unit are sent by using a plurality of antennas and a first modulation scheme having a comparatively high transmission rate while the last N symbols of the transmission unit are sent by using a plurality of antennas and a second modulation scheme having a comparatively low transmission rate. Otherwise, in the case of selecting one MCS from a plurality of MCS sets ranked by transmission rate and performing a transmission based on the transmission unit including a plurality of symbols, a plurality of symbols other than the last N symbols of the transmission unit are sent by using a plurality of antennas and a first MCS comparatively high in ranking while the last N symbols of the transmission unit are sent by using a plurality of antennas and a second MCS comparatively low in ranking.

Furthermore, the present invention is also applicable to a multiple access system such as CDMA or OFDM, provided that it is a wireless communication system for carrying out a transmission by use of a plurality of transmission antennas.

## Claims

1. A wireless transmission method used for a wireless transmitting apparatus having a plurality of antennas and for transmitting information based on a transmission unit including a plurality of symbols, the method comprising:
transmitting a plurality of symbols other than last N symbols (N is an integer equal to or greater than 1) of the transmission unit to an opposite wireless communication apparatus by use of the plurality of antennas; and
transmitting the last N symbols of the transmission unit to the opposite wireless communication apparatus by using one of the plurality of antennas.

2. A wireless transmission method according to claim 1, wherein, provided that the last N symbol is taken as second information and the plurality of symbols other than the last N symbols are as first information, the second information is information requiring higher immediateness to the opposite wireless communication apparatus as compared to the first information.

3. A wireless transmission method according to claim 2, wherein the first information is a data signal and the second information is transmission-power control information.

4. A wireless transmission method according to claim 1, wherein the antenna transmitting the last N symbols to the opposite wireless communication apparatus is fixedly defined.

5. A wireless transmission method according to claim 1, wherein the antenna transmitting the last N symbols to the opposite wireless communication apparatus is adaptively defined depending upon communication channel state between the wireless transmitting apparatus and the opposite wireless communication apparatus.

6. A wireless transmission method used for a wireless transmitting apparatus having a plurality of antennas and for transmitting information based on a transmission unit including a plurality of symbols, the method comprising:
transmitting a plurality of symbols other than last N symbols (N is an integer equal to or greater than 1)of the transmission unit to an opposite wireless communication apparatus by use of the plurality of antennas; and
transmitting same information as the last N symbols being common to the plurality of antennas to the opposite wireless communication apparatus by use of the plurality of antennas.

7. A wireless transmission method according to claim 6, wherein the last N symbols are transmitted with cyclic shift in time between the plurality of antennas.

8. A wireless transmission method according to claim 7, wherein, provided that the last N symbol is taken as second information and the plurality of symbols other than the last N symbols are as first information, the second information is information requiring higher immediateness to the opposite wireless communication apparatus as compared to the first information.

9. A wireless transmission method used for a wireless transmitting apparatus having a plurality of antennas and for transmitting information based on a transmission unit including a plurality of symbols, the method comprising:
transmitting a plurality of symbols other than last N symbols (N is an integer equal to or greater than 1)of the transmission unit to an opposite wireless communication apparatus by use of the plurality of antennas; and
transmitting the last N symbols of the transmission unit to the opposite wireless communication apparatus by use of antennas selected so as to be reduced in the number, by stages, from the plurality of antennas.

10. A wireless transmission method according to claim 1, wherein a first modulation scheme is used when transmitting the plurality of symbols other than the last N symbols (N is an integer equal to or greater than 1) of the transmission unit to an opposite wireless communication apparatus by use of the plurality of antennas, and a second modulation scheme lower in transmission rate than the first modulation scheme is used when sending the last N symbols (N is an integer equal to or greater than 1) of the transmission unit to an opposite wireless communication apparatus by use one of the plurality of antennas.

11. A wireless transmission method according to claim 1, wherein a first MCS (modulation and coding scheme), of among a plurality of MCS sets comprising combinations of modulation scheme and coding scheme ranked according to transmission rate, is used when transmitting the plurality of symbols other than the last N symbols (N is an integer equal to or greater than 1) of the transmission unit to an opposite wireless communication apparatus by use of the plurality of antennas, and a second MCS lower in ranking than the first MCS is used when sending the last N symbols (N is an integer equal to or greater than 1) of the transmission unit to an opposite wireless communication apparatus by use of the one of the plurality of antennas.

12. A wireless transmitter used for communicating with an opposite wireless communication apparatus comprising:
at least two transmission antennas (17a, 17b,···,17n);
a spatial parser (13) that divides an input data into a plurality of streams for spatial-multiplexing, wherein the each of the stream comprising a plurality of symbols; and wherein the spatial parser that provides same information to the each of the streams when the input data having information requiring immediateness.

13. The wireless transmitter according to claim 12, further comprising a CDD (cyclic delay diversity) processor (18a, 18b, ···,18n) that provides the symbol, which is inputted from the spatial parser, being cyclically shifted in time; and wherein the processor provides the symbol toward the transmission antenna.

14. The wireless transmitter according to claim 12, the wherein the information requiring immediateness is information about transmit power control (TPC) being used in the opposite wireless communication apparatus.

15. A wireless transmission method for transmitting a plurality of symbols using a plurality of antennas, comprising the steps of:
classifying a transmitting symbols to be transmitted into a first group and a second group, the first group being transmitted earlier than the second group wherein the second group comprising last N symbols (N is an integer equal to or greater than 1);
transmitting the first group of symbols using of a plurality of antennas; and
transmitting the second group of symbols using only of one antenna selected from of the plurality of antennas successively.
